# EUROPEAN PATENT APPLICATION

(11) **EP 4 765 260 A1**
(43) Date of publication of application: **24.06.2026**
(21) Application number: 24865834.6
(22) Date of filing: 11.09.2024
(51) Int. Cl.: H01M 8/04119

(54) **MEMBRANE HUMIDIFIER FOR CARTRIDGE FUEL CELLS**

(30) Priority: 12.09.2023 KR 20230121177
(71) Applicant: Kolon Industries, Inc., Seoul 07793 (KR)
(72) Inventor: KIM, In Ho, Seoul 07793 (KR); KIM, Do Woo, Seoul 07793 (KR)
(74) Representative: Vossius & Partner Patentanwälte Rechtsanwälte mbB
(86) International application number: PCT/KR2024/013791
(87) International publication number: WO 2025/058395

(57) **Abstract**

The present disclosure relates to a cartridge type fuel cell membrane humidifier including a housing including an exhaust gas inlet through which exhaust gas discharged from the fuel cell stack is introduced and an exhaust gas outlet configured to discharge the exhaust gas, and a cartridge disposed inside the housing and including a plurality of humidification membranes, the cartridge includes an inner case in which the plurality of humidification membranes are disposed, and a potting unit configured to fix the plurality of humidification membranes, the inner case including a first window portion disposed adjacent to the exhaust gas inlet and including a plurality of windows and a second window portion disposed adjacent to the exhaust gas outlet and including a plurality of windows, and the first window portion including the plurality of windows having different sizes.

## Description

### Technical Field

The present disclosure relates to a cartridge type fuel cell membrane humidifier, and more particularly, to a cartridge type fuel cell membrane humidifier, which is capable of reducing the entry resistance of a fluid flowing into a cartridge from an exhaust gas inlet by increasing the sizes of a plurality of windows provided in a first window portion disposed adjacent to the exhaust gas inlet from the center of an inner case in a direction in which the exhaust gas inlet is disposed.

### Background Art

A fuel cell is a power generation cell wherein hydrogen is combined with oxygen to generate electricity. Such a fuel cell has advantages in that it is possible to continuously generate electricity as long as hydrogen and oxygen are supplied thereto, unlike a general chemical cell, such as a dry cell or a storage cell, and in that there is no heat loss and thus, the efficiency of the fuel cell is about twice as high as the efficiency of an internal combustion engine.

A fuel cell system includes a stack, which is an electricity generation assembly of unit fuel cells each consisting of a cathode and an anode, an air supply device for supplying air to the cathode of each fuel cell, and a hydrogen supply device for supplying hydrogen to the anode of each fuel cell.

A polymer fuel cell of the fuel cell system requires adequate moisture to allow an ion exchange membrane of a membrane-electrode assembly (MEA) to function smoothly, and to this end, an air supply device of the fuel cell system is equipped with a humidifier for humidifying air supplied to the fuel cells.

The humidifier humidifies dry air supplied through an air compressor of the air supply device by using moisture in the high-temperature and high-humidity air discharged from the cathode of the fuel cell, and supplies the humidified air to the cathode of the fuel cell.

The humidifier of the fuel cell uses a membrane humidification method. In the membrane humidification type humidifier, membrane humidification is performed through a gas-to-gas moisture exchange method of exchanging high-temperature and high-humidity exhaust gas discharged from the cathode of the fuel cell with dry air supplied through the air compressor.

A membrane humidifier performs moisture exchange between high-temperature and high-humidity exhaust gas and dry air through hollow fiber membranes including hollows inside. When moisture exchange between high-temperature and high-humidity exhaust gas and dry air is performed, moisture exchange between high-temperature and high-humidity exhaust gas and dry air needs to be performed while passing through hollow fiber membranes to increase the moisture exchange efficiency.

The membrane humidifier may be manufactured through a cartridge in which a plurality of hollow fiber membranes are disposed. The cartridge may be a unit module in which the plurality of hollow fiber membranes are disposed, and a plurality of cartridges may be provided inside a housing of the membrane humidifier.

A window through which exhaust gas may be introduced or discharged may be provided in the cartridge. The high-temperature and high-humidity exhaust gas introduced into the exhaust gas inlet provided in the housing of the membrane humidifier exchanges moisture with dry air while passing through the window of the cartridge disposed adjacent to the exhaust gas inlet and moving to the hollow fiber membrane. The exhaust gas which has exchanged moisture with dry air passes through a cartridge window disposed adjacent to an exhaust gas outlet and is discharged to the outside of the housing of the membrane humidifier.

However, a membrane humidifier using a cartridge including windows have the following problems. The cartridge may include a plurality of windows having the same size, and a phenomenon may occur wherein the high-temperature and high-humidity exhaust gas introduced through the exhaust gas inlet is concentrated in a window close to the center of the cartridge.

Specifically, due to the pressure of a fluid moving from the exhaust gas inlet to the cartridge window, entry resistance may occur in a cartridge window disposed close to the exhaust gas inlet. As entry resistance occurs in the cartridge window disposed close to the exhaust gas inlet, a phenomenon may occur wherein a flow rate is concentrated in the window closer to the center of the cartridge than the cartridge window disposed close to the exhaust gas inlet.

When this phenomenon occurs wherein the flow rate is concentrated in the window closer to the center of the cartridge than the cartridge window disposed close to the exhaust gas inlet, a problem occurs in that a hollow fiber membrane disposed close to the exhaust gas inlet is not sufficiently utilized. In addition, the flow rate is concentrated in the window close to the center of the cartridge, which causes a problem in that the durability of the hollow fiber membrane disposed at the center of the cartridge deteriorates.

As described above, the entire hollow fiber membrane disposed inside the cartridge is not evenly used, which may deteriorate the performance density of the hollow fiber membrane, and accordingly, there is a problem in that the durability of the membrane humidifier deteriorates.

### Disclosure of Invention

### Technical Problem

The present disclosure solves the above problems, and relates to a cartridge type fuel cell membrane humidifier, which is capable of reducing the entry resistance of a fluid flowing into a cartridge from an exhaust gas inlet by increasing the sizes of a plurality of windows provided in a first window portion disposed adjacent to the exhaust gas inlet from the center of an inner case in a direction in which the exhaust gas inlet is disposed.

### Solution to Problem

A cartridge type fuel cell membrane humidifier of the present disclosure to solve the above problems includes a housing including an exhaust gas inlet through which exhaust gas discharged from the fuel cell stack is introduced and an exhaust gas outlet configured to discharge the exhaust gas, and a cartridge disposed inside the housing and including a plurality of humidification membranes, the cartridge includes an inner case in which the plurality of humidification membranes are disposed, and a potting unit configured to fix the plurality of humidification membranes, the inner case includes a first window portion disposed adjacent to the exhaust gas inlet and including a plurality of windows and a second window portion disposed adjacent to the exhaust gas outlet and including a plurality of windows, and the first window portion includes the plurality of windows having different sizes.

In the cartridge type fuel cell membrane humidifier of the present disclosure to solve the above problems, the cross-sectional area of the plurality of windows provided in the first window portion may increase from the center of the inner case in a direction in which the exhaust gas inlet is disposed.

In the cartridge type fuel cell membrane humidifier of the present disclosure to solve the above problems, the first window portion may include a 1-1 column in which the plurality of windows are disposed in parallel in a column direction, and a 1-2 column in which the plurality of windows are disposed in parallel in the column direction, and the plurality of windows disposed in the 1-1 column and the plurality of windows disposed in the 1-2 column may be disposed in a zigzag shape.

In the cartridge type fuel cell membrane humidifier of the present disclosure to solve the above problems, the plurality of windows provided in the first window portion may form a trapezoidal shape, and the plurality of windows may be disposed inside the trapezoidal shape.

In the cartridge type fuel cell membrane humidifier of the present disclosure to solve the above problems, the plurality of windows provided in the first window portion may form a triangular shape, and the plurality of windows may be disposed inside the triangular shape.

In the cartridge type fuel cell membrane humidifier of the present disclosure to solve the above problems, the second window portion may include the plurality of windows having the same size.

In the cartridge type fuel cell membrane humidifier of the present disclosure to solve the above problems, the second window portion may include the plurality of windows having different sizes.

In the cartridge type fuel cell membrane humidifier of the present disclosure to solve the above problems, the cross-sectional area of the plurality of windows provided in the second window portion may increase from the center of the inner case in a direction in which the exhaust gas outlet is disposed.

In the cartridge type fuel cell membrane humidifier of the present disclosure to solve the above problems, the second window portion may include a 2-1 column in which the plurality of windows are disposed in parallel in a column direction, and a 2-2 column in which the plurality of windows are disposed in parallel in the column direction, and the plurality of windows disposed in the 2-1 column and the plurality of windows disposed in the 2-2 column may be disposed in a zigzag shape.

In the cartridge type fuel cell membrane humidifier of the present disclosure to solve the above problems, the plurality of windows provided in the second window portion may form a trapezoidal shape, and the plurality of windows may be disposed inside the trapezoidal shape.

In the cartridge type fuel cell membrane humidifier of the present disclosure to solve the above problems, the plurality of windows provided in the second window portion may form a triangular shape, and the plurality of windows may be disposed inside the triangular shape.

In the cartridge type fuel cell membrane humidifier of the present disclosure to solve the above problems, the plurality of windows provided in the first window portion and the plurality of windows provided in the second window portion may be symmetrical with respect to the center of the inner case.

### Advantageous Effects of Invention

The present disclosure relates to a cartridge type fuel cell membrane humidifier having the advantage of reducing the entry resistance of the fluid flowing into the cartridge from the exhaust gas inlet by increasing the sizes of the plurality of windows provided in the first window portion disposed adjacent to the exhaust gas inlet from the center of the inner case in a direction in which the exhaust gas inlet is disposed.

The present disclosure has the advantage of reducing the resistance to a flow path generated in a window close to the exhaust gas inlet by reducing the entry resistance of the fluid flowing into the cartridge from the exhaust gas inlet, and accordingly evenly distributing a flow rate into a humidification membrane.

The present disclosure has the advantage of improving the performance density of the humidification membrane by evenly using the entire humidification membrane by evenly distributing the flow rate into the humidification membrane, and accordingly improving the durability of the membrane humidifier.

### Brief Description of Drawings

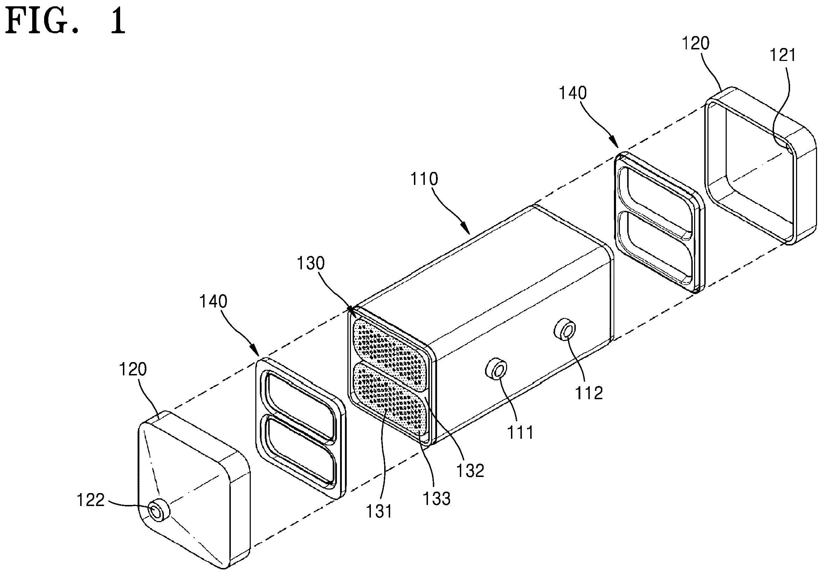

FIG. 1 is a diagram illustrating a cartridge type fuel cell membrane humidifier according to an embodiment of the present disclosure.

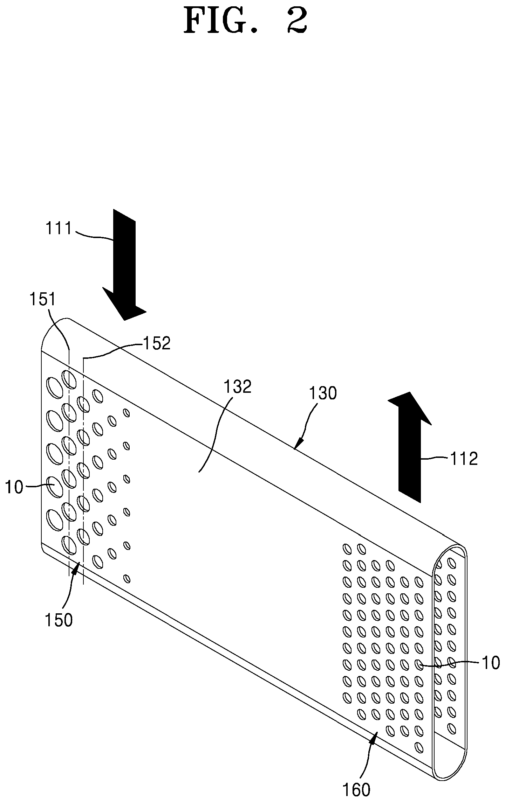

FIG. 2 is a diagram illustrating that a cross-sectional area of a plurality of windows provided in a first window portion of an inner case having a rectangular shape with round curves formed at an upper portion and a lower portion increases from a center of the inner case in a direction in which an exhaust gas inlet is disposed according to an embodiment of the present disclosure.

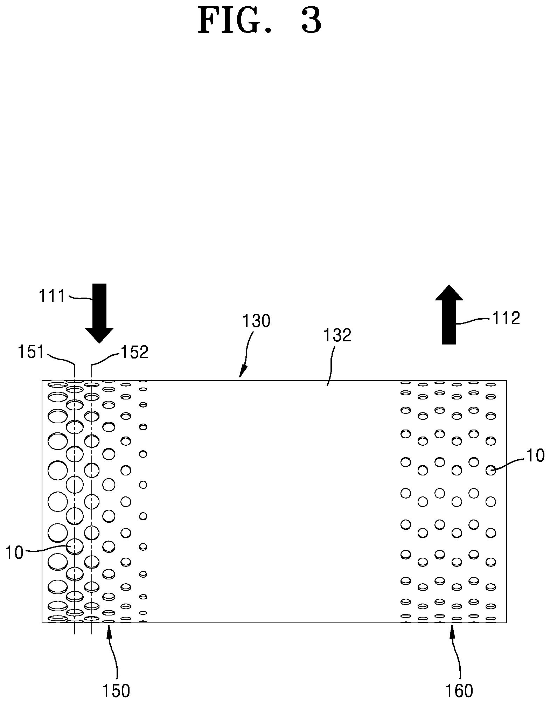

FIG. 3 is a diagram illustrating that a cross-sectional area of a plurality of windows provided in a first window portion of an inner case having a cylindrical shape increases from a center of the inner case in a direction in which an exhaust gas inlet is disposed according to an embodiment of the present disclosure.

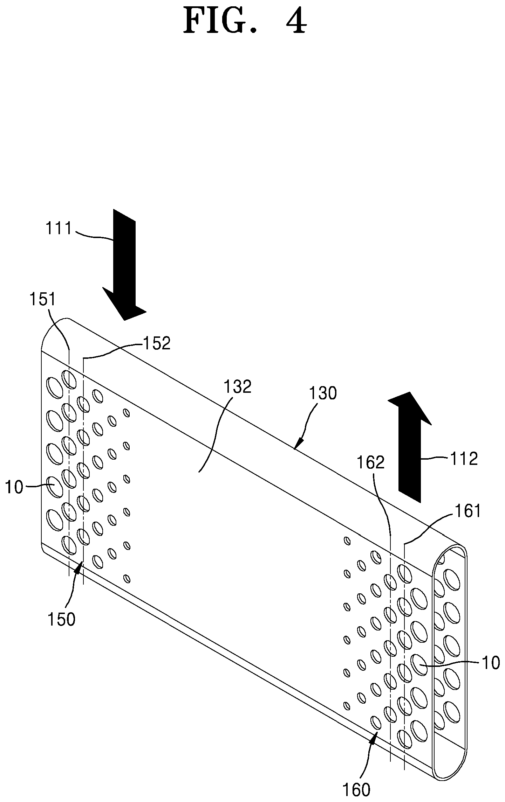

FIG. 4 is a diagram illustrating that a cross-sectional area of a plurality of windows provided in a first window portion and a second window portion of an inner case having a rectangular shape with round curves formed at an upper portion and a lower portion increases from a center of the inner case in a direction in which an exhaust gas inlet and an exhaust gas outlet are disposed according to an embodiment of the present disclosure.

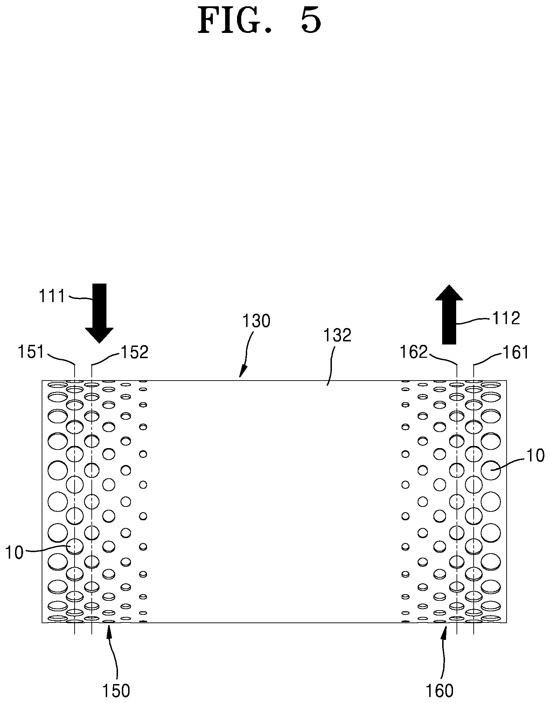

FIG. 5 is a diagram illustrating that a cross-sectional area of a plurality of windows provided in a first window portion and a second window portion of an inner case having a cylindrical shape increases from a center of the inner case in a direction in which an exhaust gas inlet and an exhaust gas outlet are disposed according to an embodiment of the present disclosure.

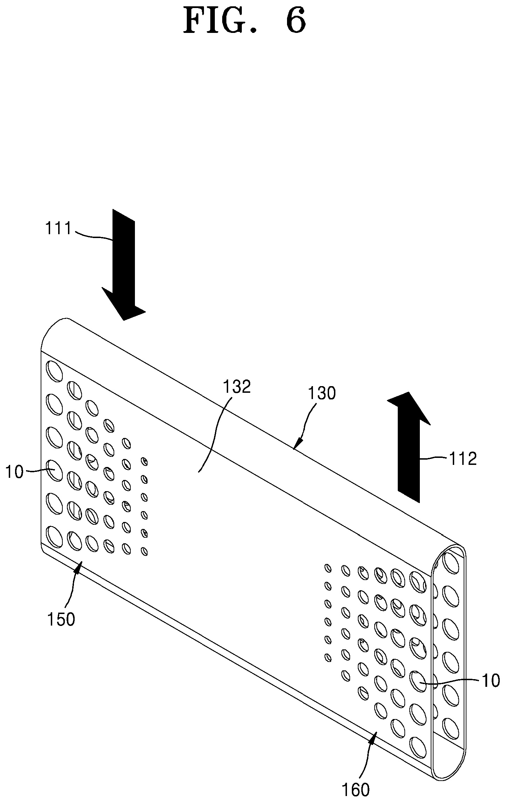

FIG. 6 is a diagram illustrating that a plurality of windows provided in a first window portion and a second window portion form a trapezoidal shape according to an embodiment of the present disclosure.

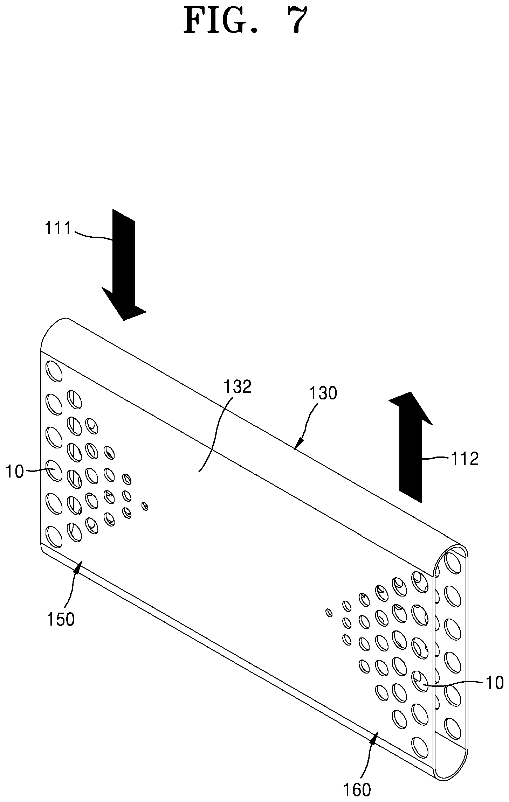

FIG. 7 is a diagram illustrating that a plurality of windows provided in a first window portion and a second window portion form a triangular shape according to an embodiment of the present disclosure.

### Mode for the Invention

The disclosure will be described more fully hereinafter with reference to the accompanying drawings, in which embodiments according to the present disclosure are shown, and the principle of the present disclosure is described so that the embodiments may be practiced by one of ordinary skill in the art. The disclosed embodiments may be implemented in various forms.

Expressions such as "including" or "may include" that may be used in various embodiments of the present disclosure indicate the existence of a corresponding function, operation, component, etc. that are disclosed, and do not limit one or more additional functions, operations, components, etc. In addition, in various embodiments according to the present disclosure, terms such as "comprise" or "have" are intended to refer to the presence of features, numbers, steps, operations, components, parts, or combinations thereof described in the specification, but it should be understood that the terms do not preclude the existence or addition of one or more other features, numbers, steps, operations, components, parts, or combinations thereof.

When a component is "connected or coupled" to another component, it should be understood that the component may be directly connected or coupled to the other component, but there may also be new other components between the component and the other component. In addition, a component is "directly connected" or "directly coupled" to another component, it should be understood that no new component exists between the component and the other component.

The terms first, second, etc. used herein may be used to describe various components, but the components should not be limited by terms. The terms are used only for the purpose of distinguishing one component from other components.

The present disclosure relates to a cartridge type fuel cell membrane humidifier, which is capable of reducing the entry resistance of a fluid flowing into a cartridge from an exhaust gas inlet by increasing the sizes of a plurality of windows provided in a first window portion disposed adjacent to the exhaust gas inlet from a center of an inner case in a direction in which the exhaust gas inlet is disposed. Hereinafter, embodiments of the present disclosure are described in detail with reference to the accompanying drawings.

The cartridge type fuel cell membrane humidifier according to an embodiment of the present disclosure includes a housing 110 and a cartridge 130.

Referring to FIG. 1, the housing 110 may be a housing in which an inner space is provided, and the cartridge 130 in which a plurality of humidification membranes 131 are disposed may be provided in the housing 110. The cartridge type fuel cell membrane humidifier according to an embodiment of the present disclosure may humidify gas to be supplied to a stack through the plurality of humidification membranes 131.

According to an embodiment of the present disclosure, the humidification membrane 131 may be a hollow fiber membrane. However, the present disclosure is not limited thereto, and the humidification membrane 131 may include various types of humidification membranes as long as the gas to be supplied to the stack may be humidified.

The housing 110 may include an exhaust gas inlet 111 through which high-temperature and high-humidity exhaust gas discharged from a fuel cell stack may be introduced, and an exhaust gas outlet 112 through which the exhaust gas may be discharged.

Referring to FIG. 1, end caps 120 may be coupled to one side and the other side of the housing 110. The end cap 120 may include an air inlet 121 for supplying dry air to the housing 110, and an air outlet 122 for discharging humidified air from the housing 110.

Specifically, the air outlet 122 may be provided in the end cap 120 coupled to one side of the housing 110, and the air inlet 121 may be provided in the end cap 120 coupled to the other side of the housing 110. The air outlet 122 is connected to the fuel cell stack, and humidified air discharged through the air outlet 122 may be supplied to the fuel cell stack.

The high-temperature and high-humidity exhaust gas discharged from the fuel cell stack may be introduced into the housing 110 through the exhaust gas inlet 111 provided in the housing 110. The exhaust gas introduced into the housing 110 supplies moisture to the dry air supplied to the housing 110 through the air inlet 121 of the end cap 120.

The exhaust gas that has supplied moisture to the dry air may be discharged to the outside through the exhaust gas outlet 112 provided in the housing 110. The dry air humidified through the housing 110 is discharged through the air outlet 122, and the humidified air is supplied to the fuel cell stack. A packing member 140 for preventing air leakage may be provided between the end cap 120 and the housing 110.

The cartridge 130 is disposed inside the housing 110 and includes the plurality of humidification membranes 131. The cartridge 130 may be a unit module in which the plurality of humidification membranes 131 are provided.

One cartridge 130 may be disposed on the housing 110. However, the present disclosure is not limited thereto, and a plurality of cartridges 130 may be disposed in the housing 110.

Referring to FIGS. 2 and 3, the cartridge 130 includes an inner case 132 in which the plurality of humidification membranes 131 are disposed, and a potting unit 133 fixing the plurality of humidification membranes 131 to the inner case 132.

The inner case 132 may be a housing of the cartridge 130, and the plurality of humidification membranes 131 are disposed in an inner space of the inner case 132. The potting unit 133 is for fixing the plurality of humidification membranes 131 to the inner case 132, and may fix the plurality of humidification membranes 131 to one side and the other side of the inner case 132.

According to an embodiment of the present disclosure, the inner case 132 of the cartridge 130 may have a rectangular shape with round curves formed at an upper portion and a lower portion as shown in FIG. 2. In addition, the inner case 132 of the cartridge 130 may also have a cylindrical shape as shown in FIG. 3.

Referring to FIGS. 2 and 3, the inner case 132 may include a first window portion 150 disposed adjacent to the exhaust gas inlet 111 and including a plurality of windows 10 and a second window portion 160 disposed adjacent to the exhaust gas outlet 112 and including the plurality of windows 10.

The window 10 may be a hole penetrating the inner case 132, and the exhaust gas moving inside the housing 110 may move to the inside of the inner case 132 through the window 10.

The windows 10 provided in the first window portion 150 and the second window portion 160 may have circular shapes, but are not limited thereto. The windows 10 provided in the first window portion 150 and the second window portion 160 may have triangular, rectangular, or polygonal shapes, and may have other shapes.

The first window portion 150 is a portion including the plurality of windows 10, and the first window portion 150 is disposed adjacent to the exhaust gas inlet 111. Specifically, the first window portion 150 may be provided at a lower portion of the exhaust gas inlet 111, and the exhaust gas introduced into the exhaust gas inlet 111 flows into the inner case 132 through the plurality of windows 10 provided in the first window portion 150.

The second window portion 160 is a portion including the plurality of windows 10, and the second window portion 160 is disposed adjacent to the exhaust gas outlet 112. Specifically, the second window portion 160 may be provided at a lower portion of the exhaust gas outlet 112, and the exhaust gas introduced into the inner case 132 may pass through the plurality of windows 10 provided in the second window portion 160 and be discharged to the exhaust gas outlet 112.

According to an embodiment of the present disclosure, a plurality of windows having different sizes may be provided in the first window portion 150. Referring to FIGS. 2 and 3, the cross-sectional area of the plurality of windows 10 provided in the first window portion 150 may increase from the center of the inner case 132 in a direction in which the exhaust gas inlet 111 is disposed.

The pressure of the exhaust gas introduced into the inner case 132 through the exhaust gas inlet 111 may increase at a point closest to the exhaust gas inlet 111, and the pressure of the exhaust gas may decrease toward the center of the inner case 132.

When the pressure of the exhaust gas introduced into the inner case 132 increases, entry resistance is generated in the window 10 by the pressure of the exhaust gas, which causes a problem in that the exhaust gas is not smoothly introduced into the inner case 132.

Specifically, because the pressure of the exhaust gas passing through the window 10 disposed close to the exhaust gas inlet 111 is greater than the pressure of the exhaust gas passing through the window 10 disposed close to the center of the exhaust case 132, there is a problem in that the exhaust gas is not smoothly introduced into the window 10 disposed close to the exhaust gas inlet 111 due to the entry resistance generated in the window 10 disposed close to the exhaust gas inlet 111.

Therefore, when the plurality of windows 10 provided in the first window portion 150 are all formed in the same size, entry resistance occurs in the window 10 disposed close to the exhaust gas inlet 111, which causes a phenomenon occurs where a flow rate is concentrated to the window 10 closer to the center of the inner case 132 than the window 10 disposed close to the exhaust gas inlet 111.

When the phenomenon occurs where the flow rate is concentrated to the window 10 closer to the center of the inner case 132 than the window 10 disposed close to the exhaust gas inlet 111, there is a problem in that the humidification membrane 131 disposed close to the exhaust gas inlet 111 is not sufficiently utilized.

In addition, the flow rate is concentrated to the window 10 close to the center of the inner case 132, which causes a problem in that the durability of the humidification membrane 131 disposed at the center of the inner case 132 deteriorates.

In order to solve this problem, the cartridge type fuel cell membrane humidifier according to an embodiment of the present disclosure may increase the cross-sectional area of the plurality of windows 10 provided in the first window portion 150 from the center of the inner case 132 in a direction in which the exhaust gas inlet 111 is disposed.

As described above, the window 10 disposed close to the exhaust gas inlet 111 increases, and thus, the entry resistance of the window 10 disposed in a direction close to the exhaust gas inlet 111 may be reduced, and accordingly, the resistance to a flow path generated in the window 10 disposed close to the exhaust gas inlet 111 may be reduced.

The resistance to the flow path generated in the window 10 disposed close to the exhaust gas inlet 111 is reduced, and thus, the exhaust gas may be smoothly introduced even through the window 10 disposed close to the exhaust gas inlet 111, and accordingly evenly distributing the exhaust gas into the humidification membrane 131.

FIG. 2 illustrates the cartridge 130 including the inner case 132 having a rectangular shape with round curves formed at an upper portion and a lower portion. FIG. 3 illustrates the cartridge 130 including the inner case 132 having a cylindrical shape.

According to an embodiment of the present disclosure, in both the cartridge 130 including the inner case 132 having the rectangular shape with round curves formed at the upper portion and the lower portion and the cartridge 130 including the inner case 132 having the cylindrical shape, the cross-sectional area of the plurality of windows 10 provided in the first window portion 150 may increase from the center of the inner case 132 in the direction in which the exhaust gas inlet 111 is disposed.

The first window portion 150 according to an embodiment of the present disclosure includes a 1-1 column 151 in which the plurality of windows 10 are disposed in parallel in a column direction, and a 1-2 column 152 in which the plurality of windows 10 are disposed in parallel in the column direction. Here, the column direction may be a direction perpendicular to a longitudinal direction (transverse direction) in which the inner case 132 of FIGS. 2 and 3 extends.

The plurality of windows 10 having the same size in the column direction may be disposed in the 1-1 column 151, and the plurality of windows 10 having the same size in the column direction may be disposed in the 1-2 column 152.

According to an embodiment of the present disclosure, the 1-1 column 151 may be disposed in a direction closer to the exhaust gas inlet 111 than the 1-2 column 152, and the sizes of the windows 10 provided in the 1-1 column 151 may be larger than the sizes of the windows 10 provided in the 1-2 column 152.

However, the present disclosure is not limited thereto, and the sizes of the windows 10 provided in the 1-1 column 151 may be the same as the sizes of the windows 10 provided in the 1-2 column 152. Specifically, after two columns (1-1 column and 1-2 column) including the windows 10 having the same size are disposed in parallel, a column (1-3 column) including the windows 10 having different sizes from the two columns may be disposed.

According to an embodiment of the present disclosure, the plurality of windows 10 disposed in the 1-1 column 151 and the plurality of windows 10 disposed in the 1-2 column 152 may be disposed in a zigzag shape.

Referring to FIGS. 2 and 3, the plurality of windows 10 disposed in the 1-1 column 151 and the plurality of windows 10 disposed in the 1-2 column 152 may be alternately disposed.

Specifically, the plurality of windows 10 disposed in the 1-1 column 151 and the plurality of windows 10 disposed in the 1-2 column 152 may be disposed in the zigzag shape so that a central axis of one window disposed in the 1-1 column 151 and a central axis of one window disposed in the 1-2 column 152 are not disposed on the same axis.

As described above, when the plurality of windows 10 disposed in the 1-1 column 151 and the plurality of windows 10 disposed in the 1-2 column 152 are disposed in the zigzag shape, the arrangement area of the windows 10 provided in the inner case 132 may be increased.

When the plurality of windows 10 disposed in the 1-1 column 151 and the plurality of windows 10 disposed in the 1-2 column 152 are disposed in parallel with each other, a distance between the central axis of the window disposed in the 1-1 column 151 and the central axis of the window disposed in the 1-2 column 152 increases. Accordingly, it is difficult to increase the arrangement area of the windows 10 provided in the inner case 132.

More specifically, a distance between the central axis of one window disposed in the 1-1 column 151 and the central axis of one window disposed in the 1-2 column 152 may be closer when the central axis of one window disposed in the 1-1 column 151 and the central axis of one window disposed in the 1-2 column 152 are not disposed on the same axis than when the central axis of one window disposed in the 1-1 column 151 and the central axis of one window disposed in the 1-2 column 152 are disposed on the same axis. Accordingly, the arrangement area of the windows 10 provided in the inner case 132 may be increased.

However, the present disclosure is not limited thereto, and the plurality of windows 10 disposed in the 1-1 column 151 and he plurality of windows 10 disposed in the 1-2 column 152 may be disposed in parallel with each other, and the windows 10 disposed in the 1-1 column 151 and the windows 10 disposed in the 1-2 column 152 may be disposed in a row.

Referring to FIGS. 2 and 3, the windows 10 having the same size may be provided in the second window portion 160 according to an embodiment of the present disclosure. Specifically, the cross-sectional area of the plurality of windows 10 provided in the first window portion 150 may increase from the center of the inner case 132 in the direction in which the exhaust gas inlet 111 is disposed, but the sizes of the plurality of windows 10 provided in the second window portion 160 may be the same.

Referring to FIGS. 4 and 5, the plurality of windows 10 having different sizes may be provided in the second window portion 160 according to another embodiment of the present disclosure. The cross-sectional area of the plurality of windows 10 provided in the second window portion 160 may increase from the center of the inner case 132 in a direction in which the exhaust gas outlet 112 is disposed.

The exhaust gas introduced into the inner case 132 through the exhaust gas inlet 111 exchanges moisture with dry air through the humidification membrane 131 provided inside the inner case 132. Thereafter, the exhaust gas may be discharged to the outside of the housing 110 through the exhaust gas outlet 112.

In order to smoothly discharge the exhaust gas, which has exchanged moisture with dry air in the inner case 132, through the exhaust gas outlet 112, the cross-sectional area of the plurality of windows 10 provided in the second window portion 160 may increase from the center of the inner case 132 in the direction in which the exhaust gas outlet 112 is disposed.

Specifically, the size of the window 10 of the second window portion 160 may be reduced for sufficient moisture exchange in a direction of the center of the inner case 132, and the size of the window 10 may be increased for discharge of the exhaust gas at a point close to the exhaust gas outlet 112.

FIG. 4 illustrates the cartridge 130 including the inner case 132 having a rectangular shape with round curves formed at an upper portion and a lower portion. FIG. 5 illustrates the cartridge 130 including the inner case 132 having a cylindrical shape.

According to an embodiment of the present disclosure, in both the cartridge 130 including the inner case 132 having the rectangular shape with round curves formed at the upper portion and the lower portion and the cartridge 130 including the inner case 132 having the cylindrical shape, the cross-sectional area of the plurality of windows 10 provided in the second window portion 160 may increase from the center of the inner case 132 in the direction in which the exhaust gas outlet 112 is disposed.

The second window portion 160 according to an embodiment of the present disclosure includes a 2-1 column 161 in which the plurality of windows 10 are disposed in parallel in a column direction, and a 2-2 column 162 in which the plurality of windows 10 are disposed in parallel in the column direction. Here, the column direction may be a direction perpendicular to a longitudinal direction (transverse direction) in which the inner case 132 of FIGS. 4 and 5 extends.

The plurality of windows 10 having the same size in the column direction may be disposed in the 2-1 column 161, and the plurality of windows 10 having the same size in the column direction may be disposed in the 2-2 column 162.

According to an embodiment of the present disclosure, the 2-1 column 161 may be disposed in a direction closer to the exhaust gas outlet 112 than the 2-2 column 162, and the sizes of the windows 10 provided in the 2-1 column 161 may be larger than the sizes of the windows 10 provided in the 2-2 column 162.

However, the present disclosure is not limited thereto, and the sizes of the windows 10 provided in the 2-1 column 161 may be the same as the sizes of the windows 10 provided in the 2-2 column 162. Specifically, after two columns (2-1 column and 2-2 column) including the windows 10 having the same size are disposed in parallel, a column (2-3 column) including the windows 10 having different sizes from the two columns may be disposed.

According to an embodiment of the present disclosure, the plurality of windows 10 disposed in the 2-1 column 161 and the plurality of windows 10 disposed in the 2-2 column 162 may be disposed in a zigzag shape.

Referring to FIGS. 4 and 5, the plurality of windows 10 disposed in the 2-1 column 161 and the plurality of windows 10 disposed in the 2-2 column 162 may be alternately disposed.

Specifically, the plurality of windows 10 disposed in the 2-1 column 161 and the plurality of windows 10 disposed in the 2-2 column 162 may be disposed in the zigzag shape so that a central axis of one window disposed in the 2-1 column 161 and a central axis of one window disposed in the 2-2 column 162 are not disposed on the same axis.

As described above, when the plurality of windows 10 disposed in the 2-1 column 161 and the plurality of windows 10 disposed in the 2-2 column 162 are disposed in the zigzag shape, the arrangement area of the windows 10 provided in the inner case 132 may be increased.

When the plurality of windows 10 disposed in the 2-1 column 161 and the plurality of windows 10 disposed in the 2-2 column 162 are disposed in parallel with each other, a distance between the central axis of the window disposed in the 2-1 column 161 and the central axis of the window disposed in the 2-2 column 162 increases. Accordingly, it is difficult to increase the arrangement area of the windows 10 provided in the inner case 132.

More specifically, a distance between the central axis of one window disposed in the 2-1 column 161 and the central axis of one window disposed in the 2-2 column 162 may be closer when the central axis of one window disposed in the 2-1 column 161 and the central axis of one window disposed in the 2-2 column 162 are not disposed on the same axis than when the central axis of one window disposed in the 2-1 column 161 and the central axis of one window disposed in the 2-2 column 162 are disposed on the same axis. Accordingly, the arrangement area of the windows 10 provided in the inner case 132 may be increased.

Referring to FIGS. 4 and 5, the plurality of windows 10 provided in the first window portion 150 and the plurality of windows 10 provided in the second window portion 160 according to an embodiment of the present disclosure may be symmetrical with respect to the center of the inner case 132.

Specifically, the first window portion 150 and the second window portion 160 may be symmetrical to each other while having the same shape with respect to the center of the inner case 132. However, the present disclosure is not limited thereto, and the first window portion 150 and the second window portion 160 may be asymmetrical with respect to the center of the inner case 132.

Referring to FIG. 6, the plurality of windows 10 provided in the first window portion 150 according to an embodiment of the present disclosure may form a trapezoidal shape. Here, the plurality of windows 10 provided in the first window portion 150 forming the trapezoidal shape may mean that a shape formed when the plurality of windows 10 on the outermost side among the plurality of windows 10 provided in the first window portion 150 are connected is a trapezoid.

When the plurality of windows 10 on the outermost side among the plurality of windows 10 provided in the first window portion 150 are connected to form the trapezoidal shape, the plurality of windows 10 provided in the first window portion 150 may be disposed inside the trapezoidal shape.

As described above, when the plurality of windows 10 provided in the first window portion 150 according to an embodiment of the present disclosure are formed in the trapezoidal shape, the area of the window 10 disposed close to the exhaust gas inlet 111 may be larger than the area of the window 10 disposed close to the center of the inner case 132.

The area of the window 10 disposed in a direction close to the exhaust gas inlet 111 increases, and thus, the entry resistance of the window 10 disposed in a direction close to the exhaust gas inlet 111 may be reduced, and accordingly, reducing the resistance to a flow path generated in the window 10 disposed close to the exhaust gas inlet 111.

The resistance to the flow path generated in the window 10 disposed close to the exhaust gas inlet 111 is reduced, and thus, the exhaust gas may be smoothly introduced even through the window 10 disposed close to the exhaust gas inlet 111, and accordingly evenly distributing the exhaust gas into the humidification membrane 131.

Referring to FIG. 7, the plurality of windows 10 provided in the first window portion 150 according to an embodiment of the present disclosure may form a triangular shape. Here, the plurality of windows 10 provided in the first window portion 150 forming the triangular shape may mean that a shape formed when the plurality of windows 10 on the outermost side among the plurality of windows 10 provided in the first window portion 150 are connected is a triangle.

When the plurality of windows 10 on the outermost side among the plurality of windows 10 provided in the first window portion 150 are connected to form the triangular shape, the plurality of windows 10 provided in the first window portion 150 may be disposed inside the triangular shape.

As described above, the plurality of windows 10 provided in the first window portion 150 according to an embodiment of the present disclosure may be disposed in various shapes as long as the area of the window 10 disposed close to the exhaust gas inlet 111 is larger than the area of the window 10 disposed close to the center of the inner case 132.

According to an embodiment of the present disclosure, when the plurality of windows 10 provided in the first window portion 150 form a trapezoidal or triangular shape, the windows 10 having the same size may be provided in the second window portion 160. Specifically, the cross-sectional area of the plurality of windows 10 provided in the first window portion 150 may increase from the center of the inner case 132 in the direction in which the exhaust gas inlet 111 is disposed, but the sizes of the plurality of windows 10 provided in the second window portion 160 may be the same.

In addition, referring to FIGS. 6 and 7, when the plurality of windows 10 provided in the first window portion 150 according to an embodiment of the present disclosure form a trapezoidal or triangular shape, the plurality of windows 10 provided in the second window portion 160 may also form the trapezoidal or triangular shape.

Referring to FIG. 6, the plurality of windows 10 provided in the second window portion 160 according to an embodiment of the present disclosure may form a trapezoidal shape. Here, the plurality of windows 10 provided in the second window portion 160 forming the trapezoidal shape may mean that a shape formed when the plurality of windows 10 on the outermost side among the plurality of windows 10 provided in the second window portion 160 are connected is a trapezoid.

When the plurality of windows 10 on the outermost side among the plurality of windows 10 provided in the second window portion 160 are connected to form the trapezoidal shape, the plurality of windows 10 provided in the second window portion 160 may be disposed inside the trapezoidal shape.

As described above, when the plurality of windows 10 provided in the second window portion 160 according to an embodiment of the present disclosure are formed in the trapezoidal shape, the area of the window 10 disposed close to the exhaust gas outlet 112 may be larger than the area of the window 10 disposed close to the center of the inner case 132.

The area of the window 10 disposed in a direction close to the exhaust gas outlet 112 increases, and thus, exhaust gas may be effectively discharged from the inner case 132 to the exhaust gas outlet 112.

Referring to FIG. 7, the plurality of windows 10 provided in the second window portion 160 according to an embodiment of the present disclosure may form a triangular shape. Here, the plurality of windows 10 provided in the second window portion 160 forming the triangular shape may mean that a shape formed when the plurality of windows 10 on the outermost side among the plurality of windows 10 provided in the second window portion 160 are connected is a triangle.

When the plurality of windows 10 on the outermost side among the plurality of windows 10 provided in the second window portion 160 are connected to form the triangular shape, the plurality of windows 10 provided in the second window portion 160 may be disposed inside the triangular shape.

As described above, the plurality of windows 10 provided in the second window portion 160 according to an embodiment of the present disclosure may be disposed in various shapes as long as the area of the window 10 disposed close to the exhaust gas outlet 112 is larger than the area of the window 10 disposed close to the center of the inner case 132.

According to an embodiment of the present disclosure, as shown in FIGS. 6 and 7, the plurality of windows 10 provided in the first window portion 150 and the plurality of windows 10 provided in the second window portion 160 may be symmetrical with respect to the center of the inner case 132.

The cartridge type fuel cell membrane humidifier according to an embodiment of the present disclosure described above has the following effects.

The cartridge type fuel cell membrane humidifier according to an embodiment of the present disclosure has the advantage of reducing the entry resistance of a fluid flowing into a cartridge from an exhaust gas inlet by increasing the sizes of a plurality of windows provided in a first window portion disposed adjacent to the exhaust gas inlet from the center of an inner case in a direction in which the exhaust gas inlet is disposed.

The cartridge type fuel cell membrane humidifier according to an embodiment of the present disclosure has the advantage of reducing the resistance to a flow path generated in a window close to the exhaust gas inlet by reducing the entry resistance of the fluid flowing into the cartridge from the exhaust gas inlet, and accordingly evenly distributing a flow rate into a humidification membrane.

The cartridge type fuel cell membrane humidifier according to an embodiment of the present disclosure has the advantage of improving the performance density of the humidification membrane by evenly using the entire humidification membrane by evenly distributing the flow rate into the humidification membrane, and accordingly improving the durability of the membrane humidifier.

Although the present disclosure has been described with reference to embodiments illustrated in the drawings, this is merely an example, and it will be understood by those skilled in the art that various modifications and variations may be made therefrom. Therefore, the true technical protection scope of the present disclosure should be determined by the technical spirit of the appended claims.

## Claims

1. A cartridge type fuel cell membrane humidifier configured to humidify gas to be supplied to a fuel cell stack, the cartridge type fuel cell membrane humidifier comprising:
a housing including an exhaust gas inlet through which exhaust gas discharged from the fuel cell stack is introduced and an exhaust gas outlet configured to discharge the exhaust gas; and
a cartridge disposed inside the housing and including a plurality of humidification membranes,
wherein the cartridge includes an inner case in which the plurality of humidification membranes are disposed and a potting unit configured to fix the plurality of humidification membranes,
the inner case includes a first window portion disposed adjacent to the exhaust gas inlet and including a plurality of windows and a second window portion disposed adjacent to the exhaust gas outlet and including a plurality of windows, and
the first window portion includes the plurality of windows having different sizes.

2. The cartridge type fuel cell membrane humidifier of claim 1, wherein
a cross-sectional area of the plurality of windows provided in the first window portion
increases from a center of the inner case in a direction in which the exhaust gas inlet is disposed.

3. The cartridge type fuel cell membrane humidifier of claim 2, wherein
the first window portion includes a 1-1 column in which the plurality of windows are disposed in parallel in a column direction and a 1-2 column in which the plurality of windows are disposed in parallel in the column direction, and
the plurality of windows disposed in the 1-1 column and the plurality of windows disposed in the 1-2 column are disposed in a zigzag shape.

4. The cartridge type fuel cell membrane humidifier of claim 2, wherein
the plurality of windows provided in the first window portion form a trapezoidal shape, and
the plurality of windows are disposed inside the trapezoidal shape.

5. The cartridge type fuel cell membrane humidifier of claim 2, wherein
the plurality of windows provided in the first window portion form a triangular shape, and
the plurality of windows are disposed inside the triangular shape.

6. The cartridge type fuel cell membrane humidifier of claim 1, wherein
the second window portion includes the plurality of windows having a same size.

7. The cartridge type fuel cell membrane humidifier of claim 1, wherein
the second window portion includes the plurality of windows having different sizes.

8. The cartridge type fuel cell membrane humidifier of claim 7, wherein
a cross-sectional area of the plurality of windows provided in the second window portion
increases from a center of the inner case in a direction in which the exhaust gas outlet is disposed.

9. The cartridge type fuel cell membrane humidifier of claim 8, wherein
the second window portion includes a 2-1 column in which the plurality of windows are disposed in parallel in a column direction, and a 2-2 column in which the plurality of windows are disposed in parallel in the column direction, and
the plurality of windows disposed in the 2-1 column and the plurality of windows disposed in the 2-2 column are disposed in a zigzag shape.

10. The cartridge type fuel cell membrane humidifier of claim 8, wherein
the plurality of windows provided in the second window portion form a trapezoidal shape, and
the plurality of windows are disposed inside the trapezoidal shape.

11. The cartridge type fuel cell membrane humidifier of claim 8, wherein
the plurality of windows provided in the second window portion form a triangular shape, and
the plurality of windows are disposed inside the triangular shape.

12. The cartridge type fuel cell membrane humidifier of claim 1, wherein
the plurality of windows provided in the first window portion and the plurality of windows provided in the second window portion are symmetrical with respect to a center of the inner case.
